# EUROPÄISCHE PATENTANMELDUNG

(11) **EP 2 484 428 A2**
(43) Veröffentlichungstag der Anmeldung: **08.08.2012**
(21) Anmeldenummer: 12154340.9
(22) Anmeldetag: 07.02.2012
(51) Int. Cl.: B01D 53/86

(54) **Verfahren zu selektiven Entschwefelung von Strippgasen**

(30) Priorität: 08.02.2011 DE 102011003786
(71) Anmelder: Helmholtz-Zentrum für Umweltforschung GmbH-UFZ, 04318 Leipzig (DE)
(72) Erfinder: Kopinke, Frank-Dieter, Prof.Dr., 04109 Leipzig (DE)
(74) Vertreter: Gulde Hengelhaupt Ziebig & Schneider

(57) **Zusammenfassung**

Die Erfindung betrifft ein Verfahren zur Oxidation und selektiven Entfernung von Schwefelkohlenstoff und/oder Thioethern aus damit verunreinigten, sauerstoffhaltigen Gasen oder Gasgemischen, **dadurch gekennzeichnet, dass** das verunreinigte Gas oder Gasgemisch mit einem selektiven Oxidationsmittel versetzt und mit einem basischen Feststoff in Kontakt gebracht wird, wobei das mit Oxidationsmittel versetzte Gas oder Gasgemisch zusammen mit dem basischen Feststoff einem ansteigenden Temperaturprofil ausgesetzt wird, welches bei einer Starttemperatur T_{Start} von ≥ 0°C bis ≤ 80°C beginnt und ansteigt bis eine Temperatur Tₘₐₓ von ≥ 100°C bis ≤ 250°C erreicht ist.

## Beschreibung

Die Reinigung kontaminierter Grund- und Abwässer kann nach dem Stand der Technik durch sog. Strippen mit Luft oder anderen sauerstoffhaltigen Gasen oder Gasgemischen erfolgen. Dabei werden flüchtige organische oder anorganische Verbindungen mit hinreichend hohen Henry-Koeffizienten (K_{H} > 0,01) aus der Wasser- in die Gasphase überführt. Der mit den Kontaminanten beladene Gasstrom wird dann seinerseits abgereinigt, z.B. durch Adsorption an Aktivkohle. Alternativen zur adsorptiven Reinigung des Gasstromes sind die thermische (T ≥ 700°C) oder thermokatalytische (T = 350 bis 500°C) Oxidation, bei der die Schadstoffe vollständig in ungefährliche Endprodukte, z.B. Kohlendioxid (CO₂ und Wasser (H₂O) oder bei chlorierten Verbindungen Chlorwasserstoff (HCl) umgewandelt werden.

Organisch kontaminierte Wässer weisen häufig ein reduzierendes Milieu auf. Dies kann dazu führen, dass Sulfat unter Beteiligung von Mikroorganismen in schwefelhaltige Verbindungen, bevorzugt Schwefelwasserstoff (H₂S) und organische Schwefelverbindungen wie Mercaptane (R-SH) und Thioether (R-Sₙ-R'), umgewandelt wird. Neben der Neubildung von Schwefelverbindungen können diese auch als primäre Kontaminanten in Wässern vorkommen, z.B. Schwefelkohlenstoff (CS₂) aus der chemischen Industrie (Karbochemie, Zelluloseindustrie etc.). Diese Schwefelverbindungen werden entsprechend ihrer Flüchtigkeit ebenfalls aus dem kontaminierten Wasser in den Gasstrom gestrippt. Der Schwefel in ihnen wird bei der thermischen und thermokatalytischen Oxidation in Schwefeldioxid (SO₂) und anteilig in Schwefeltrioxid (SO₃) umgewandelt. Dieses bildet mit dem in Strippgasen enthaltenen Wasserdampf Schwefelsäure (H₂SO₄), welche zu schweren Korrosionsschäden in den verwendeten Reaktoren und Wärmetauschern führt. Aus diesem Grund ist eine weitestgehende Entfernung von Schwefelverbindungen vor einer oxidativen Behandlung der Strippluft notwendig.

In EP 0 947 233 A1 wird ein Verfahren zur Entfernung von schwefelhaltigen Substanzen aus Gasen offenbart, welches das Mischen des belasteten Gases mit Ozon und das Inkontaktbringen der Gasmischung mit einem Zeolith in einem Temperaturbereich von 0 bis 100°C umfasst.

Rhodes et al. (in Catalysis Today 59 (2000) 443-464) und Lamperdrix et al. (in Applied Catalysis B: Environmental 17 (1998) 167-173) beschreiben die durch den basischen Feststoff Aluminiumoxid katalysierte Hydrolyse von Schwefelkohlenstoff und Carbonylsulfid.

Liu et al. (in Chinese Science Bulletin, 52 (2007) 2063-2071) beschreibt die durch den basischen Feststoff Aluminiumoxid katalysierte Oxidation von Carbonylsulfid durch Luftsauerstoff bei Raumtemperatur zu an der Katalysatoroberfläche gebundenem Sulfat und Kohlendioxid.

In US 7 357 902 B2 wird ein Verfahren beschrieben, nach dem Schwefelkohlenstoff und Carbonysulfid in einem Gas mittels eines Katalysators in Form eines eisenhaltigen Aluminiumoxides in einem Temperaturbereich von 100 bis 170°C zu Schwefel bzw. Sulfat oxidiert werden. In einem zweiten Schritt wird der Katalysator miteinem sauerstoffreichen Gas in einem Temperaturbereich von 200 bis 500°C behandelt.

Nach dem Stand der Technik sind Schwefelwasserstoff und Mercaptane relativ leicht zu entfernen, z.B. durch Ausfällung als Sulfide mit Eisensalzen oder durch Adsorption an geeigneten Metallen oder Metalloxiden. Zudem sind beide Verbindungsklassen in wässriger Lösung leicht oxidierbar, z.B. mit Wasserstoffperoxid (H₂O₂), und können so noch vor dem Strippen aus dem kontaminierten Wasser entfernt werden. Diese Methoden versagen jedoch für Schwefelverbindungen, die keine reaktiven SH-Gruppen aufweisen, wie Schwefelkohlenstoff und Thioether. Diese sind weder ausfällbar noch in Wasser leicht oxidierbar.

Aufgabe der vorliegenden Erfindung ist es, einen oder mehrere Nachteile des Standes der Technik zu vermeiden oder zu überwinden. Insbesondere ist es eine Aufgabe der vorliegenden Erfindung, ein Verfahren bereitzustellen, welches die Entfernung von Schwefelverbindungen, insbesondere von Schwefelkohlenstoff und/oder Thioethern, aus komplex beladenen Gasströmen gestattet.

Diese Aufgabe wird gelöst durch Bereitstellung eines Verfahrens zur Oxidation und selektiven Entfernung von Schwefelkohlenstoff und/oder Thioethern aus damit verunreinigten, sauerstoffhaltigen Gasen oder Gasgemischen, **dadurch gekennzeichnet, dass** das verunreinigte Gas oder Gasgemisch mit einem selektiven Oxidationsmittel versetzt und mit einem basischen Feststoff in Kontakt gebracht wird, wobei das mit selektivem Oxidationsmittel versetzte Gas oder Gasgemisch zusammen mit dem basischen Feststoff einem ansteigenden Temperaturprofil ausgesetzt wird, welches bei einer Starttemperatur T_{Start} von ≥ 0°C bis ≤ 80°C beginnt und ansteigt, bis eine Temperatur Tₘₐₓ von ≥ 100°C bis ≤ 250°C erreicht ist.

Das erfindungsgemäße Verfahren zeichnet sich aus durch eine Kombination einer Oxidation der Schwefelverbindungen mittels eines selektiv wirkenden Oxidationsmittel in der Gasphase mit einer Abreicherung der Produkte aus der Gasphase mittels einer Kontaktierung des mit Oxidationsmittel beladenen Gasstromes mit einem basischen Feststoff, bevorzugt mit großer Oberfläche, bei moderaten, ansteigenden Temperaturen von bis zu 250°C. Als Ergebnis dieser Behandlung werden alle im Gasstrom enthaltenen organischen Schwefelverbindungen einschließlich Schwefelkohlenstoff und Thioether vollständig entfernt. Eine Schwefelbilanz zeigt, dass der ursprünglich in organischen Verbindungen gebundene Schwefel vollständig auf dem basischen Feststoff, überwiegend in Form von Sulfat, abgeschieden wird. Nach Erschöpfung des basischen Feststoffs kann dieser durch einfaches Waschen mit einer Lauge, beispielsweise einer Natronlauge, regeneriert werden. Dabei wird der Schwefel als wasserlösliches Salz, insbesondere als Natriumsulfat (Na₂SO₄), in die Waschlösung überführt, wo er von Zeit zu Zeit durch Ersatz der Waschlösung ausgeschleust werden kann.

Im erfindungsgemäßen Verfahren wird das zu reinigende Gas oder Gasgemisch mit einem selektiven Oxidationsmittel versetzt. Als selektives Oxidationsmittel können Substanzen eingesetzt werden, die unter den gewählten Reaktionsbedingungen bevorzugt schwefelhaltige Verbindungen oxidieren, während andere in dem zu reinigenden Gas oder Gasgemisch vorhandene, nicht-schwefelhaltige organische Verindungen, wie z.B. Benzolkohlenwasserstoffe (BETX-Aromaten) oder organische Chlorverbindungen, wie z.B. chlorierte Ethene, insbesondere Trichlorethen und Perchlorethen, im Wesentlichen nicht oder nur sehr langsam oxidiert werden. Als selektive Oxidationsmittel werden bevorzugt Ozon (O₃) oder Chlor (Cl₂) verwendet. Diese selektiven Oxidationsmittel reagieren auch in Gegenwart eines großen Überschusses der o.g. nicht-schwefelhaltigen organischen Kontaminanten bevorzugt mit schwefelorganischen Verbindungen. Für einen Gasstrom, der ausschließlich chlorfreie Kontaminanten enthält, ist Ozon das bevorzugte Oxidationsmittel. Für einen Gasstrom, der bereits chlorierte Kontaminanten enthält, ist an Stelle von Ozon auch die Anwendung des kostengünstigeren Oxidationsmittels Chlor möglich, weil am Ende der Gasreinigung stets eine Gaswäsche zur Entfernung von Chlorwasserstoff erforderlich ist. Diese Gaswäsche entfernt auch den Chlorwasserstoff, der ggf. aus der zusätzlichen Chloreinspeisung resultiert. Die Konzentration, in der das selektive Oxidationsmittel im zu reinigenden Gas oder Gasgemisch nach der Beimengung vorliegen muss, um eine im Wesentlichen vollständige Entfernung von Schwefelkohlenstoff und/oder Thioethern zu erreichen, hängt vom Grad der Verunreinugung des zu reinigenden Gases oder Gasgemisches ab und kann vom Fachmann leicht in Routineversuchen bestimmt werden. Dabei liegt die Konzentration an selektivem Oxidationsmittel bevorzugt oberhalb der für eine selektive Oxidation stöchiometrisch notwendigen Konzentration. Besonders bevorzugt liegt die Konzentration des selektiven Oxidationsmittel im zu reinigenden Gas oder Gasgemisch bei ≥ 5ppmv, ganz besonders bevorzugt bei ≥ 50 ppmv.

Das mit einem selektiven Oxidationsmittel versetzte, zu reinigende Gas oder Gasgemisch wird mit einem basischen Feststoff in Kontakt gebracht. Als basischer Feststoff können Substanzen mit basischen Eigenschaften verwendet werden, auf denen unter den gewählten Bedingungen oxidierte Schwefelverbindungen, insbesondere Schwefeloxide wie z.B. Sulfoxide, Sulfone und Sulfonsäuren, abgeschieden werden. Dem Fachmann sind geeignete basische Feststoffe bekannt. Bevorzugt wird als basischer Feststoff Aluminiumoxid verwendet. Um die Effektivität des erfindungsgemäßen Verfahrens zu erhöhen, ist es vorteilhaft, wenn der basische Feststoff eine große spezifische Oberfläche aufweist. Bevorzugt weist der basische Feststoff eine spezifische Oberfläche von ≥ 0,1 m²/g auf, besonders bevorzugt von ≥ 1 m²/g, ganz besonders bevorzugt von ≥ 40 m²/g, oder insbesondere von ≥ 100 m²/g.

Die selektive Oxidation erfolgt i.d.R. in der Gasphase. Meist läuft diese weder ausreichend schnell, noch unter vollständiger Mineralisierung des Schwefels zu Schwefeldioxid (SO₂) ab. Die geringe Reaktionsgeschwindigkeit ist nach den bekannten Gesetzen der chemischen Kinetik für eine Reaktion zweiter Ordnung (RG = k x C₁ x C₂) auf die geringen Konzentrationen der beiden Reaktanden (1 und 2, meist im Bereich weniger ppmv) zurückzuführen. Überraschend wurde nun gefunden, dass das Zusammenwirken von selektivem Oxidationsmittel und basischem Feststoff bei moderaten Reaktionstemperaturen unter einem ansteigenden Temperaturprofil eine vollständige Eliminierung des Schwefels aus dem Gasstrom bewirkt, unabhängig von seiner ursprünglichen Bindungsform. Dabei ist insbesondere das Temperaturprofil von Bedeutung. Ein kontrollierter Temperaturanstieg von einer Starttemperatur T_{Start} von ≥ 0°C bis ≤ 80°C zu Beginn des Kontakts des mit selektivem Oxidationsmittel beladenen Gases oder Gasgemisches und dem basischen Feststoff bis zur gewünschten Endtemperatur Tₘₐₓ von ≥ 100°C bis ≤ 250°C, bevorzugt von ≥ 150°C bis ≤ 250°C, besonders bevorzugt von ≥ 180°C bis ≤ 250°C, ganz besonders bevorzugt von ≥ 180°C bis ≤ 230°C, erweist sich als entscheidend vorteilhaft gegenüber einem unmittelbaren Temperatursprung auf ein Temperaturniveau von ≥ 100°C mit Beginn des Kontakts oder einer durchgehend niedrigen Reaktortemperatur von ≤ 100°C über die gesamte Kontaktzeit.

Bei niedrigen Reaktionstemperaturen von ≥ 0°C bis ≤ 80°C, bevorzugt von ≥ 10°C bis ≤ 50°C, zu Beginn des Kontakts des mit selektivem Oxidationsmittel beladenen Gasstroms und basischem Feststoff werden die Schwefelverbindungen am basischen Feststoff, z.B. Al₂O₃, sorbiert und vom selektiven Oxidationsmittel, z.B. Ozon oder Chlor, selektiv katalytisch (partiell) oxidiert. Die entstehenden Sulfoxide, Sulfone und Sulfonsäuren sowie CS₂ benötigen aber für ihre Hydrolyse und vollständige Oxidation beispielsweise an Al₂O₃ deutlich höhere Temperaturen von ≥ 100°C bis ≤ 250°C. Würde man diese höheren Temperaturen bereits am Reaktoreingang realisieren, würde die Selektivität der Oxidationsmittel, insbesondere von Ozon, verloren gehen und ein großer Teil des Oxidationsmittel unselektiv verbraucht oder zerstört werden. Erst die Kopplung von Tieftemperaturzone mit einer Temperatur von ≥ 0°C bis ≤ 80°C, bevorzugt von ≥ 10°C bis ≤ 50°C, und einer nachfolgenden Hochtemperaturzone mit einer Temperatur von ≥ 100°C bis ≤ 250°C macht die gekoppelten Prozesse von Selektivoxidation und Hydrolyse effizient für die vollständige Entschwefelung. Da durch Oxidation und Hydrolyse im Wesentlichen Produkte mit sauren Eigenschaften entstehen, werden diese auf dem basischen Feststoff vollständig zurückgehalten.

Im erfindungsgemäßen Verfahren erfolgt die Kontaktierung des mit selektivem Oxidationsmittel versetzten, zu reinigenden Gases oder Gasgemisches mit dem basischen Feststoff nicht unmittelbar bei einer Temperatur von ≥ 100°C, sondern das mit Oxidationsmittel versetzte Gas und der basische Feststoff werden zunächst bei einer niedrigen Temperatur von ≥ 0°C bis ≤ 80°C, bevorzugt von ≥ 10°C bis ≤ 50°C, in Kontakt gebracht. Von dieser niedrigen Temperatur ausgehend, wird das Gemisch aus Gas und basischem Feststoff einem ansteigenden Temperaturprofil ausgesetzt. Ausgehend von einer Starttemperatur T_{Start} von ≥ 0°C bis ≤ 80°C steigt das Temperaturprofil an bis eine Temperatur Tₘₐₓ von ≥ 100°C bis ≤ 250°C erreicht ist. Dabei kann das Temperaturprofil schrittweise in diskreten Schritten oder rampenförmig ansteigen. Ein bevorzugtes rampenförmiges Temperaturprofil zeichnet sich dadurch aus, dass der Neigungswinkel α der Rampe in einer Darstellung der Temperatur (in °C) über der Kontaktzeit (in Sekunden) im Bereich 60° bis 89,8° beträgt, bevorzugt im Bereich 80° bis 89,5°, besonders bevorzugt im Bereich 85° bis 89°.

Bevorzugt steigt das Temperaturprofil monoton an, ohne dass es zwischendurch zu einer Temperaturabnahme kommt. Ganz besonders bevorzugt wird ein Temperaturprofil verwendet, bei dem die Temperatur gleichmäßig, d.h. mit einer konstanten Rampe über den gesamten Temperaturbereich ansteigt und in ein Plateau mit der Maximaltemperatur mündet.

Das Temperaturprofil sorgt im erfindungsgemäßen Verfahren dafür, dass das mit Oxidationmittel versetzte Gas oder Gasgemisch mit dem basischen Feststoff zunächst bei niedrigen Temperaturen in Kontakt tritt und erst im späteren Verlauf des Verfahrens höheren Temperaturen ausgesetzt wird. Besonders effektiv ist das erfindungsgemäße Verfahren, wenn die Zeit, die das mit Oxidationsmittel versetzte, zu reinigende Gas mit dem basischen Feststoff bei niedrigen Temperaturen in Kontakt steht, ausreichend lang ist. Das Temperaturprofil kann dazu derart ausgestaltet sein, dass die Kontaktdauer zwischen mit Oxidationsmittel beladenem Gas oder Gasgemisch und basischem Feststoff bei einer Temperatur von ≥ 0°C bis ≤ 80°C, bevorzugt von ≥ 10°C bis ≤ 50°C, nicht weniger als 10%, insbesondere nicht weniger als 30% der gesamten Kontaktdauer zwischen mit Oxidationsmittel beladenem Gas oder Gasgemisch und basischem Feststoff beträgt.

Das Temperaturprofil kann beispielsweise derart erreicht oder umgesetzt werden, dass das mit Oxidationsmittel beladene Gas oder Gasgemisch mit basischem Feststoff in Kontakt gebracht wird, der in unterschiedlichen, nacheinander angeordneten Zonen platziert ist, wobei die Temperatur von Zone zu Zone zunimmt.

Das erfindungsgemäße Verfahren kann in einem einzigen Reaktor durchgeführt werden oder durch eine Reihe von hintereinander geschalteten Reaktoren realisiert werden.

In einer besonderen Ausführung umfasst das erfindungsgemäße Verfahren die folgenden Schritte:
a) Bereitstellung eines zu reinigenden, sauerstoffhaltigen Gases oder Gasgemisches;
b) Vermischen des zu reinigenden, sauerstoffhaltigen Gases oder Gasgemisches mit einem selektiven Oxidationsmittel;
c) Kontaktierung des mit einem selektiven Oxidationsmittel versetzten Gases oder Gasgemisches mit einem basischen Feststoff bei einem ansteigenden Temperaturprofil;
d) Weiterleiten des gereinigten Gases oder Gasgemisches zur thermischen oder thermokatalytischen Totaloxidation; und
e) Regenerierung des verbrauchten basischen Feststoffs.

Die vorliegende Erfindung bezieht sich auch auf die Verwendung eines erfindungsgemäßen Verfahrens zur Behandlung von Abluft, die bei der Reinigung von verunreinigten Abwässern und/oder Grundwässern entsteht.

Ebenfalls von der vorliegenden Erfindung umfasst ist die Verwendung eines erfindungsgemäßen Verfahrens zur Behandlung von Abluft aus einem Gas- und/oder Gasgemisch-vermittelten Stripping-Prozess.

Wesentliche Vorteile des erfindungsgemäßen Verfahrens sind die Vermeidung der Bildung von freier Schwefelsäure, die Möglichkeit der Anwendung niedriger Konzentrationen an selektiven Oxidationsmitteln, die nur wenig oberhalb der für eine Selektivoxidation stöchiometrisch notwendigen Konzentrationen liegen, hohe Reaktionsgeschwindigkeiten der heterogen katalysierten Selektivoxidation der Schwefelverbindungen, die kleinere und damit kostengünstigere Apparate gestatten sowie die ungehinderte Passage schwefelfreier Kontaminanten durch die Entschwefelungsstufe.

Im Folgenden soll das erfindungsgemäße Verfahren an Hand von Ausführungsbeispielen beschrieben werden.

### Beispiel 1:

Das Verfahren wurde im Labormaßstab in einer Versuchseinrichtung, bestehend aus zwei Gasdosiereinrichtungen, einem Glasrohrreaktor (dᵢ = 5 mm, L = 30 cm) und einem segmentweise steuerbaren Reaktorrohrofen, durchgeführt. Der Strippgasstrom (10 bis 50 ml/min) wurde in einer 11-Glasflasche, die mit kontaminierten Wässern gefüllt wurde, mit Wasserdampf gesättigt und einem Cocktail an flüchtigen organischen Verbindungen beladen. Über ein T-Stück vor dem Reaktoreingang kann ein zweiter Gasstrom (3 ml/min), der das Oxidationsmittel enthält (1I-Vorratsgefäß), zugemischt werden. Am Reaktorein- und - ausgang befinden sich Probenentnahmeports, an denen mit Hilfe von gasdichten Mikroliterspritzen Gasproben zur Analyse entnommen werden können. Die Zusammensetzung der Gasproben wurde durch gaschromatographische Analyse, die neben organischen Verbindungen auch Schwefelwasserstoff und Schwefeldioxid erfasst, bestimmt. Als basischer Feststoff wurden ca. 5 g Aluminiumoxid (Kornfraktion 125 bis 250 µm, BET-Oberfläche ca. 150 m²/g) verwendet, das durch Tränken in 5M Natronlauge und Trocknen im Luftstrom präpariert wurde.

Ein Luftstrom (20 ml/min) wurde mit Wasserdampf bis zur Sättigung bei 20°C und je 1000 ppmv Trichlorethen (C₂HCl₃), Perchlorethen (C₂Cl₄), Benzol (C₆H₆) und Chlorbenzol (C₆H₅Cl) sowie je 20 ppmv Dimethylsulfid (CH₃-S-CH₃), Dimethyldisulfid (CH₃-S-S-CH₃) und Schwefelkohlenstoff (CS₂) beladen. Dieser Luftstrom wurde durch den mit basischem Feststoff gefüllten Reaktor geleitet (Verweilzeit ca. 10 s). Dabei wurde die Temperatur der drei Reaktorrohrofensegmente so geregelt, dass sich vom Reaktoreingang zum -ausgang hin ein ansteigendes Temperaturprofil ergab. Als Reaktionstemperatur wird hierbei stets die höchste erreichte Temperatur, also die Reaktorausgangstemperatur angegeben. Diese wurde über einen Zeitraum von 5 h von 100°C auf 250°C angehoben.

Im ersten Versuch wurde kein selektives Oxidationsmittel zum Gasstrom hinzu dosiert.

Die relativen Konzentrationen (= C_{Ausgang}/C_{Eingang}) der schwefelfreien Kontaminanten blieben über den gesamten Versuchszeitraum und Temperaturbereich konstant. Es trat also kein signifikanter Umsatz auf. Die schwefelhaltigen Verbindungen zeigten mit ansteigender Reaktionstemperatur eine abnehmende Tendenz, wobei die beiden Thioether bei 250°C zu 50%, Schwefelkohlenstoff zu 90% umgesetzt wurden. Zusätzlich zu den Ausgangskontaminanten trat ein schwefelhaltiges Reaktionsprodukt, das als Carbonylsulfid (COS) identifiziert werden konnte, in signifikanten Konzentrationen auf.

### Beispiel 2:

Es wurde wie in Beispiel 1 beschriebenen vorgegangen. Zusätzlich wurde ein weiterer, mit Ozon (1000 ppmv) angereicherter Gasstrom (3 ml/min) vor dem Reaktoreingang dem zu reinigenden Gasgemisch zugemischt. Das Verhältnis von Ozon zu Schwefel im gemischten Gasstrom betrug rund 1,5 : 1 Mole pro Mol.

Die relativen Konzentrationen (= C_{Ausgang}/C_{Eingang}) der schwefelfreien Kontaminanten blieben über den gesamten Versuchszeitraum und Temperaturbereich konstant. Die schwefelhaltigen Verbindungen zeigten mit ansteigender Reaktionstemperatur eine abnehmende Tendenz, wobei die beiden Thioether bereits ab 100°C und Schwefelkohlenstoff ab 180°C vollständig umgesetzt wurden. Es wurde kein Carbonylsulfid im Abgas detektiert.

Der Reaktor wurde bei 180°C über eine Betriebsperiode von einer Woche kontinuierlich betrieben. Danach wurden geringe, aber stetig ansteigende Konzentrationen von Schwefelkohlenstoff am Reaktorausgang detektiert. Dem wurde durch stufenweise Erhöhung der Reaktortemperatur bis auf 250°C entgegengewirkt. Auf diese Weise konnte der Reaktor weitere 7 Tage ohne bzw. mit nur geringem Durchbruch von Schwefelkohlenstoff (Umsetzungsgrade > 95%) betrieben werden. Thioether konnten im Abgas gar nicht nachgewiesen werden. Danach wurden der Versuch abgebrochen und die Reaktorfüllung regeneriert. Insgesamt konnten rund 650 I kontaminiertes Gas über 5 g basischem Feststoff effektiv selektiv entschwefelt werden. Dabei wurden 80 mg Schwefel entfernt.

### Beispiel 3:

Es wurde wie in Beispiel 2 vorgegangen mit dem Unterschied, dass ein unmittelbarer Temperatursprung für den Reaktor eingestellt wurde, so dass die gesamte Reaktorfüllung von Anfang an in einem Temperaturplateau bei konstant 180°C lag.

Unter diesen Bedingungen wurde trotz Ozonzudosierung von Anfang an ein Durchbruch der beiden Thioether zu rund 50% mit über die Betriebszeit ansteigender Tendenz beobachtet. Nach einer Woche war der Durchbruch der Thioether fast vollständig (85%). Schwefelkohlenstoff war nach dieser Zeit zu 30% durchgebrochen.

### Beispiel 4:

Der in Beispiel 2 verwendete Reaktor wurde auf Temperaturen unter 80°C abgekühlt, für 1 h mit 20 ml 5 N Natronlauge im Kreislauf gespült und im Luftstrom getrocknet. Die so regenerierte Reaktorfüllung wurde erneut zur selektiven Entschwefelung, wie in Beispiel 2 beschrieben, verwendet. Die Ergebnisse sind denen aus Versuch 2 vergleichbar.

Nach erfolgreicher Regenerierung der ersten Reaktorfüllung wurden aus dem Überschuss an Natronlauge ein Aliquot entnommen und der Sulfatgehalt darin bestimmt. Er betrug 10 mg/l, was rund 80% der entfernten Schwefelmenge entspricht.

### Beispiel 5:

Die in Beispiel 4 verwendete Reaktorfüllung wurde nach zwei Wochen Betriebszeit erneut mit Natronlauge regeneriert und unter gleichen Betriebsbedingungen zur Entschwefelung des Gasstromes bei 180°C verwendet. An Stelle von Ozon wurde Chlor als selektives Oxidationsmittel in der gleichen Konzentration (1000 ppmv im Nebenstrom bzw. 130 ppmv im Gesamtstrom) zugemischt.

Nach 7 Tagen Betriebszeit trat der erste messbare Durchbruch von Schwefelkohlenstoff auf, mit steigender Tendenz. Der Reaktorbetrieb wurde mit unveränderter Temperatur weitere 7 Tage fortgesetzt. Die relative Konzentration an Schwefelkohlenstoff im Abgas stieg bis auf 50% an. Der Anstieg wurde von einer parallel dazu ansteigenden Konzentration an Carbonylsulfid begleitet. Während der gesamten zweiwöchigen Betriebsperiode wurden keine Thioether am Reaktorausgang detektiert.

Der Versuch mit Chlor als Oxidationsmittel zeigt, dass die Umsetzung der Thioether in noch stärkerem Maße als Schwefelkohlenstoff vom Zusatz des Oxidationsmittels profitiert.

### Beispiel 6:

Die gaschromatographische Analyse des Abluftstromes erfasst eine Reihe von flüchtigen Schwefelverbindungen und Chlorkohlenwasserstoffen quantitativ. Diese Methode ist jedoch ungeeignet zur Bestimmung von polaren Schwefelverbindungen, wie Sulfonsäuren oder Sulfochloriden, die als Produkte einer unvollständigen Oxidation Schwefel aus dem Entschwefelungsreaktor transportieren könnten. Aus diesem Grunde wurde in einem weiteren Versuch analog zu Beispiel 2 verfahren und dabei zusätzlich die behandelte Abluft durch eine alkalische Waschlösung (1M NaOH) geleitet. Diese Waschlösung wurde mehrfach erneuert. Alle Waschlösungen wurde anschließend durch eine ICP-AES Analyse sehr empfindlich auf Spuren von Schwefel analysiert. Bei dieser Methode spielt die Art, in der Schwefel gebunden vorliegt, keine Rolle. Es wird ein Schwefelsummenwert erhalten. Dieser Wert lag in allen Fällen in der Nähe der Nachweisgrenze der Methode (<0,05 mg S pro I), was einer Entschwefelung der Gasstromes von >99% bezogen auf die Eingangsmenge an Schwefel entspricht.

Dieses Ergebnis belegt, dass durch das erfindungsgemäße Verfahren organische Schwefelverbindungen nicht nur umgewandelt werden, sondern der Schwefel vollständig aus dem Gasstrom entfernt wird.

## Patentansprüche

1. Verfahren zur Oxidation und selektiven Entfernung von Schwefelkohlenstoff und/oder Thioethern aus damit verunreinigten, sauerstoffhaltigen Gasen, **dadurch gekennzeichnet, dass** das verunreinigte Gas mit einem selektiven Oxidationsmittel und mit einem basischen Feststoff in Kontakt gebracht wird, wobei das mit Oxidationsmittel versetzte Gas zusammen mit dem basischen Feststoff einem ansteigenden Temperaturprofil ausgesetzt wird, welches bei einer Starttemperatur T_{Start} von 0°C bis 80°C beginnt und ansteigt bis eine Temperatur Tₘₐₓ von 100°C bis 250°C erreicht ist.

2. Verfahren nach Anspruch 1, **dadurch gekennzeichnet, dass** das Temperaturprofil stufenförmig in diskreten Schritten ansteigt.

3. Verfahren nach Anspruch 1, **dadurch gekennzeichnet, dass** das Temperaturprofil gleichmäßig rampenförmig ansteigt.

4. Verfahren nach Anspruch 1, **dadurch gekennzeichnet, dass** das Temperaturprofil monoton stetig ansteigt.

5. Verfahren nach einem der vorhergehenden Ansprüche, **dadurch gekennzeichnet, dass** die Kontaktdauer zwischen mit Oxidationsmittel beladenem Gas und basischem Feststoff bei einer Temperatur von 0°C bis 80°C nicht weniger als 10% der gesamten Kontaktdauer beträgt.

6. Verfahren nach einem der vorhergehenden Ansprüche, **dadurch gekennzeichnet, dass** das selektive Oxidationsmittel Ozon (O₃) oder Chlor (Cl₂) umfasst oder daraus besteht.

7. Verfahren nach einem der vorhergehenden Ansprüche, **dadurch gekennzeichnet, dass** der basische Feststoff Aluminiumoxid enthält oder daraus besteht.

8. Verfahren nach Anspruch 7, **dadurch gekennzeichnet, dass** der basische Feststoff eine spezifische Oberfläche von ≥ 0,1 m²/g aufweist.

9. Verfahren nach einem der vorhergehenden Ansprüche, **dadurch gekennzeichnet, dass** das ansteigende Temperaturprofil bei einer Starttemperatur T_{Start} von 10°C bis 50°C beginnt.

10. Verfahren nach einem der vorhergehenden Ansprüche, **dadurch gekennzeichnet, dass** eine Temperatur Tₘₐₓ von 150°C bis 250°C erreicht wird.

11. Verfahren nach einem der vorhergehenden Ansprüche, **dadurch gekennzeichnet, dass** das gereinigte Gas zur thermischen oder thermokatalytischen Totaloxidation weitergeleitet wird.

12. Verfahren nach einem der vorhergehenden Ansprüche, **dadurch gekennzeichnet, dass** der verbrauchte basische Feststoff regeneriert wird.

13. Verwendung eines Verfahrens nach einem der Ansprüche 1 bis 12 zur Behandlung von Abluft, die bei der Reinigung von verunreinigten Abwässern und/oder Grundwässern entsteht.

14. Verwendung eines Verfahrens nach einem der Ansprüche 1 bis 12 zur Behandlung von Abluft aus einem Gas- und/oder Gasgemisch-vermittelten Stripping-Prozess.
